# EUROPEAN PATENT APPLICATION

(11) **EP 4 501 733 A1**
(43) Date of publication of application: **05.02.2025**
(21) Application number: 22935047.5
(22) Date of filing: 28.03.2022
(51) Int. Cl.: B60W 40/04

(54) **DEVICE FOR CONTROLLING MOBILE BODY, METHOD FOR CONTROLLING MOBILE BODY, AND STORAGE MEDIUM**

(71) Applicant: HONDA MOTOR CO., LTD., Minato-ku Tokyo 107-8556 (JP)
(72) Inventor: MATSUNAGA Hideki, Wako-shi, Saitama 351-0193 (JP); MATSUMOTO Takashi, Wako-shi, Saitama 351-0193 (JP); WAKAYAMA Ryoji, Wako-shi, Saitama 351-0193 (JP); AIZAWA Koki, Wako-shi, Saitama 351-0193 (JP); KURAMITSU Yunosuke, Wako-shi, Saitama 351-0193 (JP); SHIRAKATA Kento, Wako-shi, Saitama 351-0193 (JP)
(74) Representative: Weickmann & Weickmann PartmbB
(86) International application number: PCT/JP2022/014975
(87) International publication number: WO 2023/187893

(57) **Abstract**

A mobile object control device includes a recognition unit configured to recognize a surrounding situation of a mobile object on the basis of an output of an external environment detection device configured to detect an external situation of the mobile object and a control unit configured to control at least a drive unit configured to move the mobile object. The control unit controls the drive unit on the basis of a situation of an intersection recognized by the recognition unit so that the mobile object is stopped when the recognition unit recognizes that the mobile object is moving in a predetermined region and the mobile object needs to stop in accordance with a state of a first traffic light located in a movement direction of the mobile object in front of the intersection.

## Description

### TECHNICAL FIELD

The present invention relates to a mobile object control device, a mobile object control method, and a storage medium.

### BACKGROUND ART

Conventionally, practical applications have been underway for mobile objects that move autonomously on sidewalks. In this regard, an invention of a device for notifying a driver of a stop position when braking is applied in front of an intersection or the like has been disclosed (Patent Document 1).

### Citation List

### Patent Document

Patent Document 1
Japanese Unexamined Patent Application, First Publication No. 2021-064111

### SUMMARY OF INVENTION

### Technical Problem

In the technology described in the patent document, when a mobile object is stopped autonomously in front of an intersection without considering the behavior of a case where the mobile object is stopped autonomously in front of the intersection, the mobile object may not be able to be suitably controlled.

The present invention has been made in consideration of such circumstances and an objective of the present invention is to provide a mobile object control device, a mobile object control method, and a storage medium for enabling a mobile object to be suitably controlled when the mobile object is autonomously stopped in front of an intersection.

### Solution to Problem

A mobile object control device, a mobile object control method, and a storage medium according to the present invention adopt the following configurations.
(1): According to an aspect of the present invention, there is provided a mobile object control device for controlling a mobile object capable of moving at least in a predetermined region different from a roadway and on a crosswalk, the mobile object control device including: a recognition unit configured to recognize a surrounding situation of the mobile object on the basis of an output of an external environment detection device configured to detect an external situation of the mobile object; and a control unit configured to control at least a drive unit configured to move the mobile object, wherein the control unit controls the drive unit on the basis of a situation of an intersection recognized by the recognition unit so that the mobile object is stopped when the mobile object is moving in the predetermined region and the recognition unit recognizes that the mobile object needs to stop in accordance with a state of a first traffic light located in a movement direction of the mobile object in front of the intersection.
(2): In the above-described aspect (1), the recognition unit recognizes a shape of a region around the intersection including a position of the crosswalk in a process in which the mobile object approaches the intersection and causes a memory to store shape information that is a recognition result, and the control unit controls the drive unit on the basis of the shape information stored in the memory.
(3): In the above-described aspect (1), the control unit causes the mobile object to stop at a first position where a state of the first traffic light is detectable by the external environment detection device.
(4): In the above-described aspect (3), the control unit causes the mobile object to move to a second position where the state of the first traffic light is detectable by the external environment detection device when the state of the first traffic light is no longer detectable by the external environment detection device due to a change in a situation in front of the intersection after the mobile object is stopped.
(5): In the above-described aspect (1), the first traffic light whose state is detected by the recognition unit is a pedestrian traffic light, and the recognition unit searches for a position of the first traffic light in the output of the external environment detection device on the basis of a position of a sidewalk connected to the intersection and a height assumed to be that of the pedestrian traffic light.
(6): In the above-described aspect (1), the recognition unit recognizes traffic participants located near the intersection, and the control unit causes the mobile object to stop at a position where a flow of the traffic participants moving near the intersection without stopping is not blocked.
(7): In the above-described aspect (1), the recognition unit recognizes a position of a braille block located in front of the intersection, and the control unit causes the mobile object to stop at a position not covering the braille block.
(8): In the above-described aspect (1), the recognition unit recognizes a state of a second traffic light absent in a movement direction of the mobile object and traffic participants located near the intersection when the state of the first traffic light is not detectable by the external environment detection device after the mobile object stops, and the control unit executes a preliminary operation for crossing the intersection on the basis of the recognized state of the second traffic light and movement of the traffic participants.
(9): In the above-described aspect (8), the preliminary operation is an operation for moving the mobile object in a direction identical to a movement direction of the traffic participants at a speed lower than a normally set speed.
(10): In the above-described aspect (8), the preliminary operation includes an operation for outputting predetermined information around the mobile object using an information output device.
(11): According to another aspect of the present invention, there is provided a mobile object control method to be executed by a processor for controlling a mobile object capable of moving at least in a predetermined region different from a roadway and on a crosswalk, the mobile object control method including: recognizing a surrounding situation of the mobile object on the basis of an output of an external environment detection device configured to detect an external situation of the mobile object; and controlling the drive unit on the basis of a situation of the intersection recognized by the recognition unit so that the mobile object is stopped when the mobile object is moving in the predetermined region and it is recognized that the mobile object needs to stop in accordance with a state of a first traffic light located in a movement direction of the mobile object in front of the intersection.
(12): According to yet another aspect of the present invention, there is provided a storage medium storing a program for causing a processor for controlling a mobile object capable of moving at least in a predetermined region different from a roadway and on a crosswalk to: recognize a surrounding situation of the mobile object on the basis of an output of an external environment detection device configured to detect an external situation of the mobile object; and control the drive unit on the basis of a situation of the intersection recognized by the recognition unit so that the mobile object is stopped when the mobile object is moving in the predetermined region and it is recognized that the mobile object needs to stop in accordance with a state of a first traffic light located in a movement direction of the mobile object in front of the intersection.

### Advantageous Effects of Invention

According to the above-described aspects (1) to (12), it is possible to suitably control a mobile object when the mobile object is autonomously stopped in front of an intersection.

### BRIEF DESCRIPTION OF DRAWINGS

FIG. 1 is a diagram showing an example of a configuration of a mobile object and a control device according to an embodiment.
FIG. 2 is a perspective view of the mobile object viewed from above.
FIG. 3 is a flowchart showing an example of a flow of a process executed by a physical object recognition unit 130 and an intersection passage control unit 142 in cooperation.
FIG. 4 is a flowchart showing an example of a flow of a process executed by the physical object recognition unit 130 and the intersection passage control unit 142 in cooperation.
FIG. 5 is an explanatory diagram showing a process of recognizing a shape of a region around an intersection.
FIG. 6 is an explanatory diagram showing a process of searching for a position of a pedestrian traffic light.
FIG. 7 is an explanatory diagram showing a process of searching for a second position.
FIG. 8 is an explanatory diagram showing a process of confirming a state of a second traffic light TL2.

### DESCRIPTION OF EMBODIMENTS

Hereinafter, embodiments of a mobile object control device, a mobile object control method, and a program according to the present invention will be described with reference to the drawings. A mobile object moves both on a roadway and in a predetermined region different from the roadway. The mobile object can also move across a crosswalk at an intersection. The mobile object may be referred to as micromobility. An electric kickboard is a type of micromobility. Moreover, the mobile object may be a vehicle that an occupant can board or may be an autonomous mobile object capable of performing unmanned autonomous movement. The autonomous mobile object is used, for example, for an application to transport cargo or the like. The predetermined region is, for example, a sidewalk. Moreover, the predetermined region may be a part or all of a roadside strip, a bicycle lane, a public open space, or the like or may include all sidewalks, roadside strips, bicycle lanes, public open spaces, and the like. In the following description, it is assumed that the predetermined region is a sidewalk. In the following description, a part described as the "sidewalk" can be read as the "predetermined region" as appropriate. In addition, the mobile object may be an autonomous vehicle that moves exclusively on a sidewalk and crosses an intersection through a crosswalk.

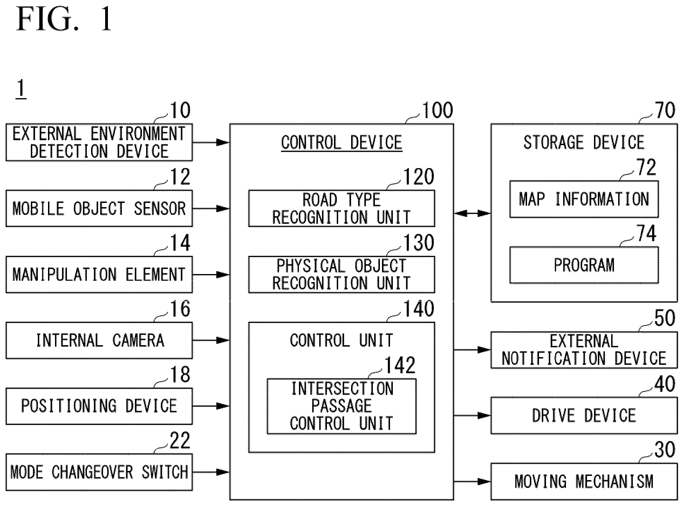

FIG. 1 is a diagram showing an example of a configuration of the mobile object 1 and the control device 100 according to the embodiment. The mobile object 1 includes, for example, an external environment detection device 10, a mobile object sensor 12, a manipulation element 14, an internal camera 16, a positioning device 18, a mode changeover switch 22, a moving mechanism 30, a drive device 40, an external notification device 50, a storage device 70, and a control device 100. Also, some constituent elements not essential for implementing the functions of the present invention may be omitted.

The external environment detection device 10 includes various types of devices in which a movement direction of the mobile object 1 is designated as a detection range. The external environment detection device 10 includes an external camera, a radar device, a light detection and ranging (LIDAR) sensor, a sensor fusion device, and the like. The external environment detection device 10 outputs information indicating a detection result (an image, a position of a physical object, or the like) to the control device 100.

The mobile object sensor 12 includes, for example, a speed sensor, an acceleration sensor, a yaw rate (angular velocity) sensor, an orientation sensor, a manipulation quantity detection sensor attached to the manipulation element 14, and the like. The manipulation element 14 includes, for example, a manipulation element for issuing an acceleration/deceleration instruction (for example, an accelerator pedal or a brake pedal) and a manipulation element for issuing a steering instruction (for example, a steering wheel). In this case, the mobile object sensor 12 may include an accelerator opening degree sensor, a brake depression amount sensor, a steering torque sensor, and the like. The mobile object 1 may include a type of manipulation element other than the above manipulation elements (for example, a non-annular rotation manipulation element, a joystick, a button, or the like) as the manipulation element 14.

The internal camera 16 images at least a head of the occupant of the mobile object 1 from the front. The internal camera 16 is a digital camera that uses an imaging element such as a charge-coupled device (CCD) or a complementary metal oxide semiconductor (CMOS). The internal camera 16 outputs a captured image to the control device 100.

The positioning device 18 is a device for measuring a position of the mobile object 1. The positioning device 18 is, for example, a global navigation satellite system (GNSS) receiver, and identifies the position of the mobile object 1 on the basis of a signal received from a GNSS satellite and outputs the identified position as position information. Also, the position information of the mobile object 1 may be estimated from a position of a Wi-Fi base station to which a communication device to be described below is connected.

The mode changeover switch 22 is a switch to be manipulated by the occupant. The mode changeover switch 22 may be a mechanical switch or a graphical user interface (GUI) switch set on the touch panel. The mode changeover switch 22 receives a manipulation for switching a driving mode to any one of, for example, mode A that is an assist mode in which one of the steering manipulation and acceleration/deceleration control is performed by the occupant and the other is performed automatically and that may be mode A-1 in which the steering manipulation is performed by the occupant and the acceleration/deceleration control is performed automatically or mode A-2 in which an acceleration/deceleration manipulation is performed by the occupant and the steering control is performed automatically, mode B that is a manual driving mode in which the steering manipulation and the acceleration/deceleration manipulation are performed by the occupant, and mode C that is an automated driving mode in which the steering control and the acceleration/deceleration control are performed automatically.

The moving mechanism 30 is a mechanism for moving the mobile object 1 on the road. The moving mechanism 30 is, for example, a wheel group that includes a steered wheel and a driven wheel. Moreover, the moving mechanism 30 may be a leg unit for multi-legged walking.

The drive device 40 outputs a force to the moving mechanism 30 so that the mobile object 1 can be moved. For example, the drive device 40 includes a motor that drives the driven wheel, a battery that stores electric power to be supplied to the motor, a steering device that adjusts the steering angle of the steered wheel, and the like. The drive device 40 may include an internal combustion engine, a fuel cell, or the like as a driving force output means or an electric power generation means. Moreover, the drive device 40 may further include a braking device using a friction force or air resistance.

The external notification device 50 is, for example, a lamp, a display device, a speaker, or the like provided on an outer plate portion of the mobile object 1 and configured to provide a notification of information to the outside of the mobile object 1. The external notification device 50 performs different operations in a state in which the mobile object 1 is moving on the sidewalk and a state in which the mobile object 1 is moving on the roadway. For example, the external notification device 50 is controlled so that light of the lamp is emitted when the mobile object 1 is moving on the sidewalk and light of the lamp is not emitted when the mobile object 1 is moving on the roadway. The color of the light emitted by this lamp is preferably a color specified by law. The external notification device 50 may be controlled so that the light of the lamp is emitted in green when the mobile object 1 is moving on the sidewalk and the light of the lamp is emitted in blue when the mobile object 1 is moving on the roadway. When the external notification device 50 is a display device, the external notification device 50 displays text or a graphic indicating "moving on the sidewalk" when the mobile object 1 is moving on the sidewalk.

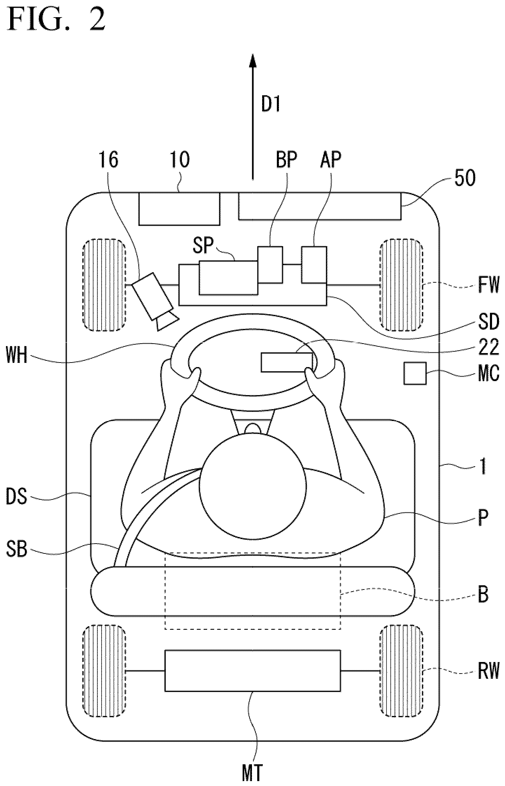

FIG. 2 is a perspective view of the mobile object 1 viewed from above. In FIG. 2, FW denotes the steered wheel, RW denotes the driven wheel, SD denotes the steering device, MT denotes the motor, and B denotes the battery. The steering device SD, the motor MT, and the battery B are included in the drive device 40. Moreover, AP denotes the accelerator pedal, BP denotes the brake pedal, WH denotes the steering wheel, SP denotes the speaker, and MC denotes a microphone. The mobile object 1 shown in FIG. 2 is a single-seater mobile object and an occupant P is seated in the driver's seat DS and wearing a seat belt SB. An arrow D1 indicates a movement direction (a speed vector) of the mobile object 1. The external environment detection device 10 is provided near a front end of the mobile object 1, the internal camera 16 is provided at a position where the head of the occupant P can be imaged from the front of the occupant P, and the mode changeover switch 22 is provided on a boss portion of the steering wheel WH. Moreover, the external notification device 50 serving as a display device is provided near the front end of the mobile object 1.

Returning to FIG. 1, the storage device 70 is, for example, a non-transitory storage device such as a hard disk drive (HDD), a flash memory, or a random-access memory (RAM). The storage device 70 stores map information 72, a program 74 to be executed by the control device 100, and the like. Although the storage device 70 is shown outside a frame of the control device 100 in FIG. 1, the storage device 70 may be included in the control device 100. Moreover, the storage device 70 may be provided on a server (not shown).

### [Control device]

The control device 100 includes, for example, a road type recognition unit 120, a physical object recognition unit 130, and a control unit 140. The control unit 140 further includes an intersection passage control unit 142. These constituent elements are implemented, for example, by a hardware processor such as a central processing unit (CPU) executing a program (software) 74. Also, some or all of these constituent elements may be implemented by hardware (including a circuit unit; circuitry) such as a large-scale integration (LSI) circuit, an application-specific integrated circuit (ASIC), a field-programmable gate array (FPGA), or a graphics processing unit (GPU) or may be implemented by software and hardware in cooperation. The program may be pre-stored in the storage device 70 or may be stored in a removable storage medium (a non-transitory storage medium) such as a DVD or a CD-ROM and installed in the storage device 70 when the storage medium is mounted in a drive device.

The road type recognition unit 120 recognizes whether the mobile object 1 is moving on the roadway or the sidewalk. For example, the road type recognition unit 120 recognizes whether the mobile object 1 is moving on the roadway or the sidewalk by analyzing an image captured by the external camera of the external environment detection device 10. Also, the output of a radar device, a LIDAR sensor, a sensor fusion device, or the like may be used in an auxiliary way.

The road type recognition unit 120 adds a point value to a roadway score Sr every time each of the plurality of first events indicating that the mobile object 1 is moving on the roadway is recognized in the image captured by the external camera, and recognizes that the mobile object 1 is moving on the roadway when the roadway score Sr is greater than or equal to a first threshold value. In this case, the road type recognition unit 120 weights a point value in accordance with a degree of confidence when each of the plurality of first events has been recognized and adds the weighted point value to the roadway score Sr. Here, when the road type recognition unit 120 has recognized any one of a plurality of second events indicating that the mobile object 1 is moving on the sidewalk in the image captured by the external camera, it is recognized that the mobile object 1 is moving on the sidewalk regardless of the roadway score Sr. The first events are an event in which there is no static obstacle such as a standing signboard, an event in which the vehicle is moving, an event in which there is a road surface marking, an event in which there is a crosswalk, and an event in which the mobile object is located on the lower side of a step. The second events are an event in which there is a static obstacle such as a standing signboard, an event in which there is a braille block, and an event in which the mobile object is located on an upper side of the step.

The physical object recognition unit 130 recognizes a physical object located near the mobile object 1 on the basis of an output of the external environment detection device 10. Physical objects include some or all of mobile objects such as a vehicle, a bicycle, and a pedestrian, course boundaries such as a road marking, a step, a guardrail, a road shoulder, a median strip, structures installed on the road such as a road sign and a signboard, and an obstacle such as a falling object located (having fallen) on the course. For example, the physical object recognition unit 130 acquires information such as the presence, position, and type of another mobile object when an image captured by the external camera of the external environment detection device 10 is input to a trained model that has been trained to output information such as the presence, position, and type of a physical object if the image captured by the external camera is input. A type of the other mobile object can also be estimated on the basis of a size in the image and/or the intensity of reflected waves received by the radar device of the external environment detection device 10. Moreover, the physical object recognition unit 130 acquires, for example, the speed of another mobile object detected by the radar device using a Doppler shift or the like.

Further, the physical object recognition unit 130 recognizes a surrounding situation of the mobile object 1 including a situation of an intersection through which the mobile object 1 passes on the basis of an output of the external environment detection device 10. The physical object recognition unit 130 is an example of a "recognition unit" in the claims.

The control unit 140 controls, for example, the drive device 40 in accordance with a set driving mode. Also, the mobile object 1 may execute only some of the following driving modes, but the control unit 140 sets different speed limit values when the mobile object 1 moves on the roadway and when the mobile object 1 moves on the sidewalk in any case. In this case, the mode changeover switch 22 may be omitted.

In mode A-1, the control unit 140 controls the motor MT of the drive device 40 so that a distance from a physical object located in front of the mobile object 1 is maintained at a certain distance or more when the mobile object 1 moves on the roadway and the mobile object 1 moves at a first speed V1 (e.g., a speed of 10 [km/h] or more and less than several tens of kilometers per hour [km/h]) when a distance from a physical object located in front of the mobile object 1 is sufficiently long with reference to information about a course and a physical object based on the output of the physical object recognition unit 130. The control unit 140 controls the motor MT of the drive device 40 so that a distance from a physical object located in front of the mobile object 1 is maintained at a certain distance or more when the mobile object 1 moves on the sidewalk and the mobile object 1 moves at the second speed V2 (for example, a speed of less than 10 [km/h]) when a distance from a physical object located in front of the mobile object 1 is sufficiently long. This function is similar to an adaptive cruise control (ACC) function of a vehicle in which the first speed V1 or the second speed V2 is designated as the set speed and the technology used in ACC can be used. Moreover, in mode A-1, the control unit 140 controls the steering device SD so that a steering angle of the steered wheel is changed on the basis of a manipulation quantity of the manipulation element 14 such as the steering wheel. This function is similar to that of a power steering device and the technology used in the power steering device can be used. Also, electronic control is not performed in relation to steering and the mobile object 1 may include a steering device in which the manipulation element 14 and the steering mechanism are mechanically connected.

In mode A-2, the control unit 140 controls the steering device SD of the drive device 40 so that a target trajectory along which the mobile object 1 can move while avoiding a physical object within the course is generated with reference to information about the course and the physical object based on the output of the physical object recognition unit 130 and the mobile object 1 moves along the target trajectory. In relation to acceleration/deceleration, the control unit 140 controls the motor MT of the drive device 40 on the basis of the speed of the mobile object 1 and the manipulation quantity of the accelerator pedal or the brake pedal. The control unit 140 controls the motor MT of the drive device 40 in a state in which the first speed V1 is designated as the upper limit speed (wherein this control indicates that the mobile object 1 is not accelerated even if there is a further acceleration instruction when the mobile object 1 reaches the upper limit speed in the case of mode A-2) when the mobile object 1 is moving on the roadway and controls the drive device 40 in a state in which the second speed V2 is designated as the upper limit speed when the mobile object 1 is moving on the sidewalk.

In mode B, the control unit 140 controls the motor MT of the drive device 40 on the basis of the speed of the mobile object 1 and the manipulation quantity of the accelerator pedal or brake pedal. The control unit 140 controls the motor MT of the drive device 40 in a state in which the first speed V1 is designated as the upper limit speed (wherein this control indicates that the mobile object 1 is not accelerated even if there is a further acceleration instruction when the mobile object 1 reaches the upper limit speed in the case of mode B) when the mobile object 1 is moving on the roadway and controls the motor MT of the drive device 40 in a state in which the second speed V2 is designated as the upper limit speed when the mobile object 1 is moving on the sidewalk. In relation to steering, mode B is similar to mode A-1.

In mode C, the control unit 140 controls the drive device 40 so that a target trajectory along which the mobile object 1 can move while avoiding a physical object within the course is generated with reference to information about the course and the physical object based on the output of the physical object recognition unit 130 and the mobile object 1 moves along the target trajectory. In this case, the control unit 140 may generate a route for reaching a destination in advance, generate a target trajectory along the route, or generate a target trajectory on the basis of a guideline such as "go straight along the road." Even in mode C, the control unit 140 controls the drive device 40 in a state in which the first speed V1 is designated as the upper limit speed when the mobile object 1 is moving on the roadway and controls the drive device 40 in a state in which the second speed V2 is designated as the upper limit speed when the mobile object 1 is moving on the sidewalk.

### [Control at time of intersection passage]

Hereinafter, control for passing an intersection through a crosswalk at the time of movement on a sidewalk in mode C will be described. The intersection passage control unit 142 collates a position of the mobile object 1 with the map information 72 and operates when the mobile object 1 is moving on the sidewalk and is within a predetermined distance from the intersection where a traffic light is located. The intersection passage control unit 142 is an example of a "control unit" in the claims.

When the mobile object 1 is moving on the sidewalk and the physical object recognition unit 130 recognizes that the physical object recognition unit 130 needs to stop in accordance with a state of a first traffic light located in a movement direction of the mobile object 1 in front of the intersection, the intersection passage control unit 142 controls the drive device 40 on the basis of a situation of the intersection recognized by the physical object recognition unit 130 so that the mobile object 1 is stopped.

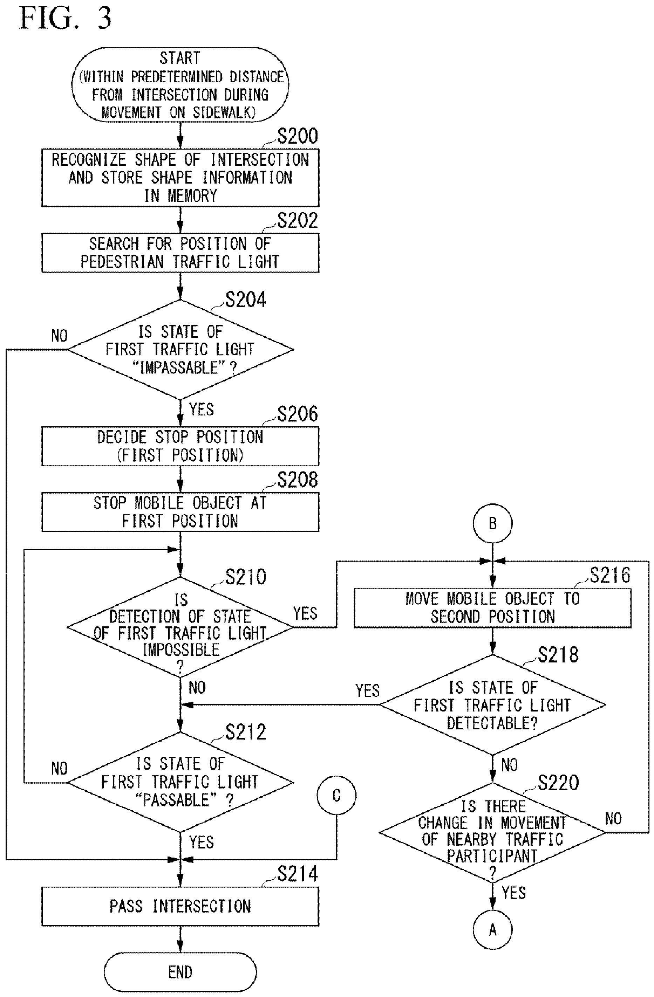

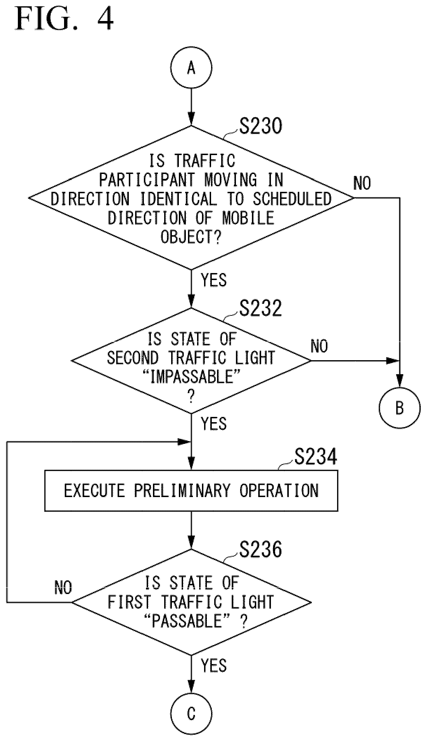

FIGS. 3 and 4 are a flowchart showing an example of a flow of a process executed by the physical object recognition unit 130 and the intersection passage control unit 142 in cooperation.

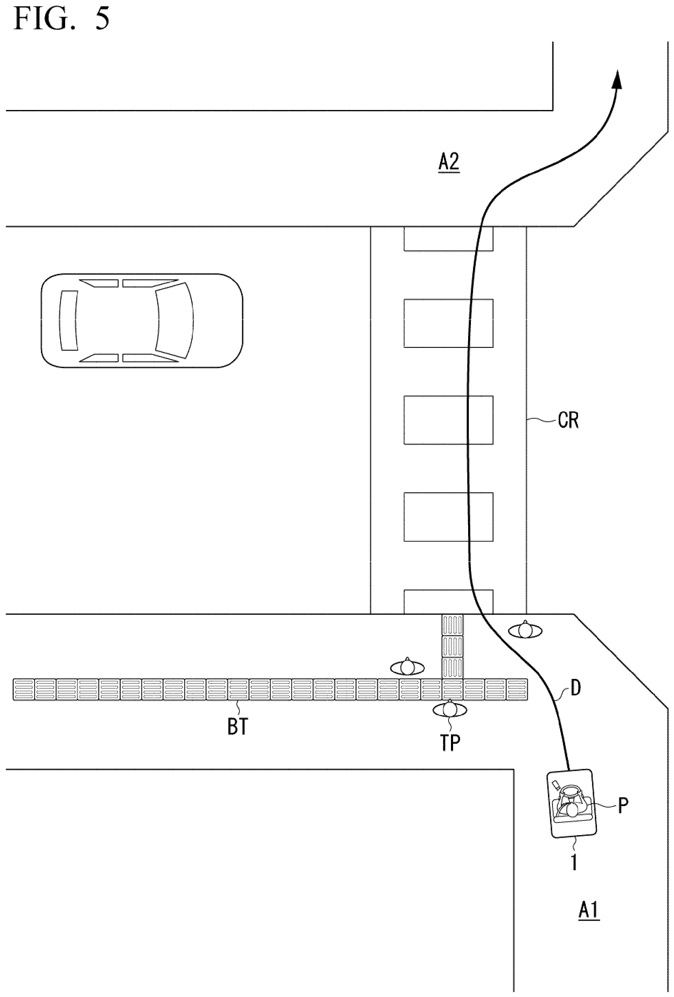

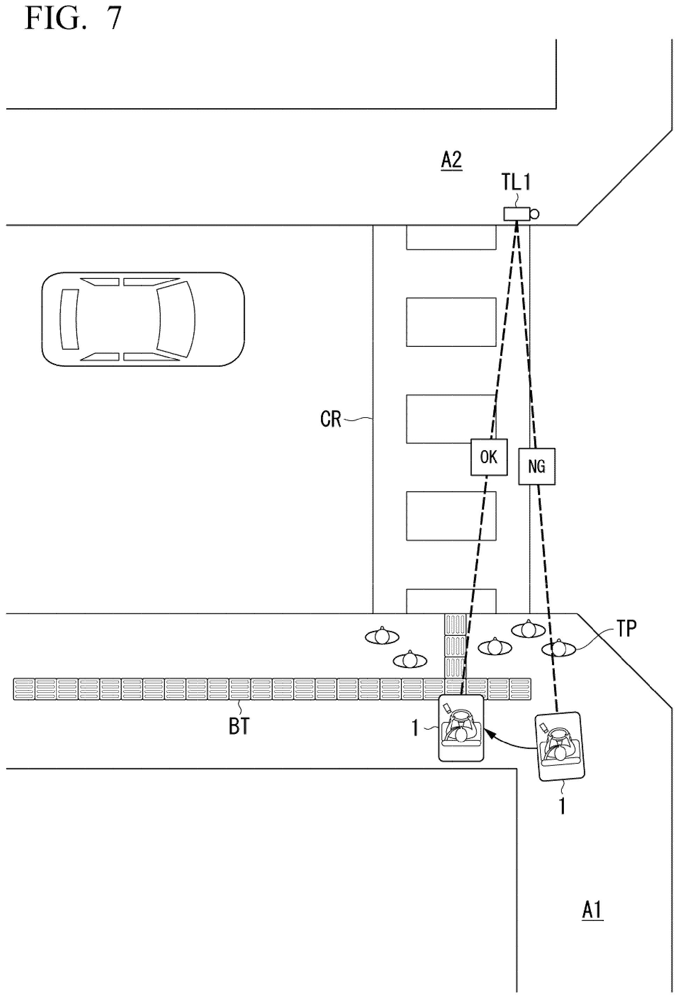

First, the physical object recognition unit 130 recognizes a shape of a region around an intersection including a position of a crosswalk and stores shape information that is a recognition result in the memory (the storage device 70) (step S200). FIG. 5 is an explanatory diagram showing a process of recognizing a shape of a region around the intersection. In FIG. 5, D denotes a scheduled path of the mobile object 1. For example, the physical object recognition unit 130 designates any position of the mobile object 1 as a reference (an origin in a coordinate system), recognizes a sidewalk region A1 where the mobile object 1 is moving, a crosswalk CR, a sidewalk region A2 on the opposite side across the crosswalk CR, and the like, and causes the memory to store shape information indicating recognition results. The intersection passage control unit 142 generates a target trajectory when the mobile object 1 moves on the basis of the shape information. The physical object recognition unit 130 further repeatedly recognizes a region around the intersection, particularly, a braille block BT within the region A1, a position and speed vector (including a speed and movement direction) of a traffic participant TP, and the like. Traffic participants include pedestrians, bicycles, wheelchairs, and the like. Although a process on a virtual plane viewed from above has been described with reference to FIG. 5, this process may be performed on an image plane of an image captured by a camera of the external environment detection device 10. The same applies to FIG. 7, which will be described below.

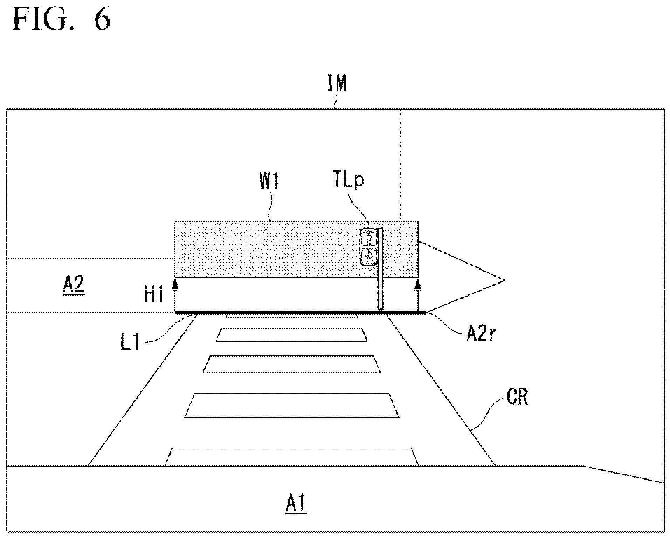

Returning to FIG. 3, the physical object recognition unit 130 searches for a position of a pedestrian traffic light on the basis of the shape information (step S202). FIG. 6 is an explanatory diagram showing a process of searching for the position of the pedestrian traffic light. This process is performed, for example, on an image plane of an image IM captured by the camera of the external environment detection device 10. For example, the physical object recognition unit 130 extracts a reference line L1 having a certain distance from an end A2r within the boundary line in front of the sidewalk region A2 on the opposite side across the crosswalk CR, and sets a search region W1 of a predetermined height in which a line obtained through movement by an offset height H1 from the reference line L1 in an upward direction is designated as the lower side. The offset height H1 is a height assumed to be that of a pedestrian traffic light and is set depending on the position of the reference line L1 in the image. The physical object recognition unit 130 sets the offset height H1 to a small value as the reference line L1 is located on the upper side of the image. The physical object recognition unit 130, for example, searches for the pedestrian traffic light by inputting an image within the search region W1 to a trained model by machine learning. Hereinafter, the pedestrian traffic light discovered in the processing of step S202 is referred to as a first traffic light TL1.

Returning to FIG. 3, the physical object recognition unit 130 determines whether or not a state of the discovered first traffic light TL1 is "impassable" (step S204). The "impassable" state is, for example, a state in which there is no light emission of a red or yellow color and an arrow indicating a direction for indications. On the other hand, a "passable" state is, for example, a state in which there is light emission of a blue or green color or an arrow indicating the direction for an indication. Also, the definitions of "impassable" and "passable" may be arbitrarily changed according to the laws and regulations of the country in which the mobile object 1 is located. For example, the physical object recognition unit 130 may include a state indicated by flashing blue or green light in the "impassable" state. When it is determined that the state of the first traffic light is "passable" instead of "impassable," the intersection passage control unit 142 controls the drive device 40 so that the mobile object 1 is allowed to pass the intersection through the crosswalk CR (step S214).

When it is determined that the state of the first traffic light TL1 is "impassable," the intersection passage control unit 142 decides a position (a first position) where the mobile object 1 is stopped (step S206). The intersection passage control unit 142 decides, for example, the first position in accordance with the following order of priority.
(1) A position where the state of the first traffic light is detectable.
(2) A position not covering the braille block.
(3) A position where a flow of traffic participants moving in a region around the intersection without stopping is not blocked.

Also, the intersection passage control unit 142 controls the drive device 40 so that the mobile object 1 is moved to the first position and stopped (step S208).

Subsequently, the physical object recognition unit 130 determines whether or not the external environment detection device 10 can no longer detect the state of the first traffic light TL1 (step S210). When the external environment detection device 10 can detect the state of the first traffic light TL1, the physical object recognition unit 130 determines whether or not the state of the first traffic light TL1 is "passable" (step S212). When it is determined that the state of the first traffic light TL1 is "passable," the intersection passage control unit 142 controls the drive device 40 so that the mobile object 1 is allowed to pass the intersection through the crosswalk CR (step S214). When it is determined that the state of the first traffic light TL1 is not "passable," the process is returned to step S210.

When it is determined in step S210 that the external environment detection device 10 can no longer detect the state of the first traffic light TL1, the intersection passage control unit 142 controls the drive device 40 so that the mobile object 1 is moved to the second position and stopped (step S216).

The second position is a position where the external environment detection device 10 can detect the state of the first traffic light TL1. FIG. 7 is an explanatory diagram showing a process of searching for the second position. For example, the intersection passage control unit 142 causes the mobile object 1 to move along an arc centered on a position of the first traffic light TL1 recognized in the processing of step S202 (a position on a virtual plane seen from above) in a trajectory available from steering performance of the mobile object 1 without coming into contact with the traffic participant TP, fixes the position of the mobile object 1 as the second position when the external environment detection device 10 has obtained information indicating that the state of the first traffic light TL1 has been detected from the physical object recognition unit 130, and causes the mobile object 1 to stop. When the state of the first traffic light TL1 cannot be detected due to movement on the arc, the intersection passage control unit 142 may cause the mobile object 1 to approach the first traffic light TL1 or to move away from the first traffic light TL1 and may cause the mobile object 1 to move along the arc again. In the above-described operation, the physical object recognition unit 130 determines whether or not the external environment detection device 10 can detect the state of the first traffic light TL1 (step S218). When the external environment detection device 10 can detect the state of the first traffic light TL1, the process moves to step S212. Moreover, in addition to movement along the arc, the intersection passage control unit 142 may move in a left/right direction with respect to the first traffic light TL1, move away from the first traffic light TL1, or move in a combination thereof to decide the second position.

When the external environment detection device 10 cannot detect the state of the first traffic light TL1, the physical object recognition unit 130 determines whether or not there is a change in the movement of the traffic participant TP near the mobile object 1 (step S220). For example, when the physical object recognition unit 130 detects that the stopped traffic participant TP has started to move, it is determined that there has been a change in the movement of the traffic participant TP. If there is no change in the movement of the traffic participant TP, the process returns to step S216.

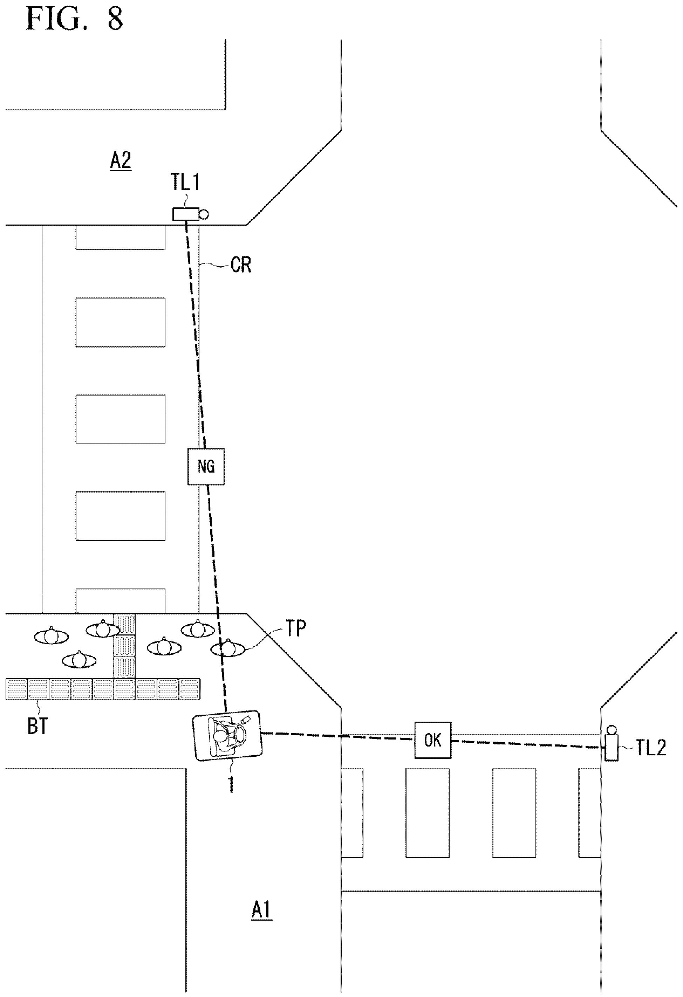

When there is a change in the movement of the traffic participant TP, the physical object recognition unit 130 determines whether or not the traffic participant TP is moving in a direction identical to a scheduled direction in which the mobile object 1 moves (step S230), and further determines whether or not the state of a second traffic light TL2 is "impassable" (step S232). FIG. 8 is an explanatory diagram showing a process of confirming the state of the second traffic light TL2. The second traffic light TL2 is a traffic light absent in the movement direction of the mobile object 1. More specifically, the second traffic light is, for example, a pedestrian traffic light located at an end in a direction perpendicular to a direction in which the mobile object 1 crosses. The physical object recognition unit 130, for example, causes the mobile object 1 to turn approximately 90 degrees on a trajectory available from the steering performance via the intersection passage control unit 142, so that the second traffic light TL2 is included in a detection range of the external environment detection device 10, and recognizes the state of the second traffic light TL2 in that state.

When a negative determination result has been obtained in at least one of steps S230 and S232, the process returns to step S216. When positive determination results have been obtained in both steps S230 and S232, the intersection passage control unit 142 executes a preliminary operation (step S234).

The preliminary operation is, for example, an operation in which the mobile object 1 is moved in a direction identical to the movement direction of the traffic participant TP at a speed lower than a normally set speed (the above-described second speed V2). In this case, the intersection passage control unit 142 may use the external notification device 50 to output predetermined information (a message) such as "confirming green signal" around the mobile object 1. When the state of the first traffic light is detected while the preliminary operation is being performed and the state is "passable" (step S236; YES), the process proceeds to step S214 and the intersection passage control unit 142 controls the drive device 40 so that the mobile object 1 is allowed to pass the intersection through the crosswalk CR (step S214).

According to the embodiment described above, a mobile object can be appropriately controlled when the mobile object is stopped autonomously in front of an intersection.

The embodiment described above can be represented as follows.

A mobile object control device including:
a storage medium storing computer-readable instructions; and
a processor connected to the storage medium, the processor executing the computer-readable instructions to:
   recognize a surrounding situation of a mobile object capable of moving at least in a predetermined region different from a roadway and on a crosswalk on the basis of an output of an external environment detection device configured to detect an external situation of the mobile object; and
   control the drive unit on the basis of a recognized situation of an intersection so that the mobile object is stopped when the mobile object is moving in the predetermined region and it is recognized that the mobile object needs to stop in accordance with a state of a first traffic light located in a movement direction of the mobile object in front of the intersection.

Although modes for carrying out the present invention have been described above using embodiments, the present invention is not limited to the embodiments and various modifications and substitutions can also be made without departing from the scope and spirit of the present invention.

### REFERENCE SIGNS LIST

10 External environment detection device
12 Mobile object sensor
14 Manipulation element
16 Internal camera
18 Positioning device
22 Mode changeover switch
30 Moving mechanism
40 Drive device
50 External notification device
70 Storage device
100 Control device
120 Road type recognition unit
130 Physical object recognition unit
140 Control unit
142 Intersection passage control unit

## Claims

1. A mobile object control device for controlling a mobile object capable of moving at least in a predetermined region different from a roadway and on a crosswalk, the mobile object control device comprising:
a recognition unit configured to recognize a surrounding situation of the mobile object on the basis of an output of an external environment detection device configured to detect an external situation of the mobile object; and
a control unit configured to control at least a drive unit configured to move the mobile object,
wherein the control unit controls the drive unit on the basis of a situation of an intersection recognized by the recognition unit so that the mobile object is stopped when the mobile object is moving in the predetermined region and the recognition unit recognizes that the mobile object needs to stop in accordance with a state of a first traffic light located in a movement direction of the mobile object in front of the intersection.

2. The mobile object control device according to claim 1,
wherein the recognition unit recognizes a shape of a region around the intersection including a position of the crosswalk in a process in which the mobile object approaches the intersection and causes a memory to store shape information that is a recognition result, and
wherein the control unit controls the drive unit on the basis of the shape information stored in the memory.

3. The mobile object control device according to claim 1, wherein the control unit causes the mobile object to stop at a first position where a state of the first traffic light is detectable by the external environment detection device.

4. The mobile object control device according to claim 3, wherein the control unit causes the mobile object to move to a second position where the state of the first traffic light is detectable by the external environment detection device when the state of the first traffic light is no longer detectable by the external environment detection device due to a change in a situation in front of the intersection after the mobile object is stopped.

5. The mobile object control device according to claim 1,
wherein the first traffic light whose state is detected by the recognition unit is a pedestrian traffic light, and
wherein the recognition unit searches for a position of the first traffic light in the output of the external environment detection device on the basis of a position of a sidewalk connected to the intersection and a height assumed to be that of the pedestrian traffic light.

6. The mobile object control device according to claim 1,
wherein the recognition unit recognizes traffic participants located near the intersection, and
wherein the control unit causes the mobile object to stop at a position where a flow of the traffic participants moving near the intersection without stopping is not blocked.

7. The mobile object control device according to claim 1,
wherein the recognition unit recognizes a position of a braille block located in front of the intersection, and
wherein the control unit causes the mobile object to stop at a position not covering the braille block.

8. The mobile object control device according to claim 1,
wherein the recognition unit recognizes a state of a second traffic light absent in a movement direction of the mobile object and traffic participants located near the intersection when the state of the first traffic light is not detectable by the external environment detection device after the mobile object stops, and
wherein the control unit executes a preliminary operation for crossing the intersection on the basis of the recognized state of the second traffic light and movement of the traffic participants.

9. The mobile object control device according to claim 8, wherein the preliminary operation is an operation for moving the mobile object in a direction identical to a movement direction of the traffic participants at a speed lower than a normally set speed.

10. The mobile object control device according to claim 8, wherein the preliminary operation includes an operation for outputting predetermined information around the mobile object using an information output device.

11. A mobile object control method to be executed by a processor for controlling a mobile object capable of moving at least in a predetermined region different from a roadway and on a crosswalk, the mobile object control method comprising:
recognizing a surrounding situation of the mobile object on the basis of an output of an external environment detection device configured to detect an external situation of the mobile object; and
controlling a drive unit of the mobile object on the basis of a recognized situation of an intersection so that the mobile object is stopped when the mobile object is moving in the predetermined region and it is recognized that the mobile object needs to stop in accordance with a state of a first traffic light located in a movement direction of the mobile object in front of the intersection.

12. A storage medium storing a program for causing a processor for controlling a mobile object capable of moving at least in a predetermined region different from a roadway and on a crosswalk to:
recognize a surrounding situation of the mobile object on the basis of an output of an external environment detection device configured to detect an external situation of the mobile object; and
control a drive unit of the mobile object on the basis of a recognized situation of an intersection so that the mobile object is stopped when the mobile object is moving in the predetermined region and it is recognized that the mobile object needs to stop in accordance with a state of a first traffic light located in a movement direction of the mobile object in front of the intersection.
